# EUROPÄISCHE PATENTANMELDUNG

(11) **EP 1 464 923 A1**
(43) Veröffentlichungstag der Anmeldung: **06.10.2004**
(21) Anmeldenummer: 04007743.0
(22) Anmeldetag: 31.03.2004
(51) Int. Cl.: G01D 3/08, G01R 31/28

(54) **Vorrichtung zur Detektion von Kondensation in einem Sensorgehäuse**

(30) Priorität: 02.04.2003 DE 10315106
(71) Anmelder: Endress + Hauser Flowtec AG, 4153 Reinach/BL (CH)
(72) Erfinder: Matt, Christian, 4147 Aesch, BL (CH)
(74) Vertreter: Andres, Angelika

(57) **Zusammenfassung**

Die Erfindung bezieht sich auf eine Vorrichtung zur Überwachung eines Meßumformers (2) eines Feldgeräts (1) zur Bestimmung und/oder Überwachung einer physikalischen und/oder chemischen Prozeßgröße, wobei in dem Gehäuse (11), in dem der Meßumformer (2) angeordnet ist, zumindest ein Sensor (8) vorgesehen ist, der über eine Zeitspanne in vorgegebenen Abständen die Temperatur und die relative Luftfeuchte in dem Gehäuse (11) ermittelt, und wobei eine Regel-/Auswerteeinheit (7) vorgesehen ist, die anhand der gemessenen Temperatur- und relativen Luftfeuchtewerte die absolute Luftfeuchte und/oder den Taupunkt in dem Gehäuse (11) des Meßumformers (2) bestimmt und einen Alarm ausgibt, wenn die absolute Luftfeuchte und/oder der Taupunkt in dem Gehäuse (11) des Meßumformers (2) einen kritischen Wert erreicht.

## Beschreibung

Die Erfindung bezieht sich auf eine Vorrichtung zur Überwachung eines Meßumformers eines Feldgeräts zur Bestimmung und/oder Überwachung einer physikalischen und/oder chemischen Prozeßgröße.

Beispielsweise handelt es sich bei dieser Prozeßgröße um den Masse- oder Volumenstrom eines Meßmediums, das durch ein Meßrohr fließt. Selbstverständlich kann es sich bei der Prozeßgröße auch um den Füllstand, den Druck, die Temperatur, die Feuchte, den pH-Wert oder die Konzentration einer Substanz in einem Meßmedium oder um eine anderweitige Prozeßgröße handeln.

Im Zusammenhang mit der Bestimmung und/oder Überwachung von Prozeßgrößen geht die Tendenz zunehmend in die Richtung, dem Anwender neben der eigentlichen Meßwert-Information auch Information über die Arbeitsweise oder die Lebensdauer des Meßgerätes unter den jeweils vorherrschenden System- und/oder Prozeßbedingungen zur Verfügung zu stellen. Gängige Schlagworte sind in diesem Zusammenhang 'Predictive Maintenance' und 'Meantime Before Failure'. Ziel dieser Bemühungen ist es letztendlich, Standund Ausfallzeiten eines Meßgeräts auszuschließen oder auf ein Minimum zu reduzieren.

Ein Meßgerät besteht üblicherweise aus einem Meßaufnehmer bzw. einem Sensor und einem Meßumformer bzw. einem Transmitter, wobei letzterer die elektrischen und/oder elektronischen Komponenten zur Meßsignalaufbereitung, zur Meßwertgewinnung und/oder zur Datenübertragung an eine entfernte Leitstelle enthält. Unterschieden wird darüber hinaus zwischen sog. Kompaktgeräten, bei denen Meßaufnehmer und Meßumformer eine integrale Einheit bilden, und Meßgeräten, bei denen der Meßaufnehmer und der Meßumformer voneinander getrennte Einheiten bilden.

Bei industriell genutzten Meßgeräten herschen oft klimatisch schwierige Bedingungen. Diese werden z. B. verursacht durch mehr oder minder starke Feuchte- und Temperaturwechsel oder durch Reinigungsaktivitäten am Meßgerät oder in der Umgebung des Meßgeräts. Um die auf Feuchte empfindlich reagierenden Elektronikteile im Gehäuse des Meßumformers vor Kondensat zu schützen, müssen alle Fügestellen und Öffnungen, wie Deckel, Kabelverschraubungen, Verschlüsse und andere Dichtungen gasdicht verschlossen sein. Unter den bereits zuvor erwähnten Umgebungsbedingungen ist es dennoch nicht auszuschließen, daß die Dichtstellen im Laufe der Zeit in Mitleidenschaft gezogen werden. Bei häufigen Temperaturwechseln können sich nachfolgend zwischen dem Innenraum des Gehäuses und der Umgebung Druckdifferenzen aufbauen, die üblicherweise kleiner sind als 200mbar. Ein Unterdruck im Gehäuse des Meßumformers kann dann dazu führen, daß sukzessive feuchte warme Luft aus der Umgebung in den Innenraum des Meßumformers gesaugt wird. Durch eine Art Pumpeffekt kann die Luft in dem Gehäuse des Meßumformers sukzessive soviel Feuchtigkeit aufnehmen, daß es bei einem nachfolgenden Absinken der Umgebungstemperatur zu einer Kondensation von Flüssigkeit im Gehäuse des Meßumformers kommt. Im Extremfall führt dieser Pumpeffekt zu einem sog. Absaufen des Umformers, d.h. die Elektronikkomponenten sind in unmittelbarem Kontakt mit dem Kondensat.

Der Erfindung liegt die Aufgabe zugrunde, eine Vorrichtung vorzuschlagen, mit der die Gefahr einer Kondensatbildung im Gehäuse eines Meßumformers reduziert wird.

Die Aufgabe wird dadurch gelöst, daß in dem Gehäuse, in dem der Meßumformer angeordnet ist, zumindest ein Sensor vorgesehen ist, der über eine Zeitspanne in vorgegebenen Abständen die Temperatur und die relative Luftfeuchte in dem Gehäuse des Meßumformers ermittelt, und daß eine Regel-/Auswerteeinheit vorgesehen ist, die anhand der gemessenen Temperatur- und relativen Luftfeuchtewerte die absolute Luftfeuchte und/oder den Taupunkt in dem Gehäuse des Meßumformers bestimmt und einen Alarm ausgibt, wenn die absolute Luftfeuchte und/oder der Taupunkt in dem Gehäuse einen kritischen Wert erreicht. Der Temperatur-/Feuchtesensor bzw. die Temperatur-/Feuchtesensoren können als integrierte Einheiten oder als getrennte Einheiten ausgeführt sein. Weiterhin kann sich die Anzahl der Sensoren in den einzelnen Kategorien voneinander unterscheiden. So kann es in Abhängigkeit von dem Anwendungsfall Sinn machen, in dem Gehäuse des Umformers mehrere Temperatursensoren aber z.B. nur einen Feuchtesensor vorzusehen. Durch diese Anordnung können Temperaturunterschiede innerhalb des Gehäuses bei der Ermittlung des kritischen Wertes berücksichtigt werden. In Praxis tritt z.B. der Fall auf, daß in der Nähe der Schnittstelle des Meßumformers eine niedrigere Temperatur herrscht als in der Nähe oder unmittelbar auf den die Elektronikkomponenten tragenden Leiterplatten.

Gemäß einer vorteilhaften Weiterbildung der erfindungsgemäßen Vorrichtung handelt es sich bei dem Sensor zum Messen der Temperatur und der relativen Luftfeuchte um einen SMD-Halbleitersensor. Beispielhaft sei an dieser Stelle der Sensor SHT11 von der Firma Sensirion genannt. Der Vorteil eines derartigen Sensors ist darin zu sehen, daß ein kleiner, hochintegrierter Halbleitersensor sowohl die Temperatur und die relative Luftfeuchte mißt und die Meßwerte anschließend in bereits digitaler Form an einen Mikroprozessor weitergibt. Bei dem Mikroprozessor kann es sich selbstverständlich um denselben Mikroprozessor handeln, der in der Regel-/Auswerteeinheit die Meßwerte für die Prozeßgröße bereitstellt.

Eine vorteilhafte Ausgestaltung sieht eine Speichereinheit vor, in der ein Arbeitspunkt bzw. ein Arbeitsbereich für die Temperatur, der der Meßumformer in seiner Prozeßumgebung üblicherweise ausgesetzt ist, vorgegeben ist. Bevorzugt setzt die Regel-/Auswerteeinheit einen Alarm bereits dann, wenn ein vorgegebener Toleranzwert um den kritischen Wert erreicht bzw. unterschritten wird.
Es versteht sich von selbst, daß der Arbeitspunkt bzw. der Arbeitsbereich für die Temperatur von dem Bedienpersonal auch frei vorgebbar ausgestaltet sein kann. Dies ist insbesondere dann sinnvoll, wenn die Umgebungsbedingungen sich im Laufe der Zeit ändern. Bevorzugt erfolgt die Eingabe des Temperaturwertes bzw. des Temperaturbereichs über eine Eingabeeinheit. Diese kann direkt an dem Meßgerät angeordnet sein, sie kann jedoch auch einer entfernten Leitstelle zugeordnet sein.

Erfindungsgemäß gibt die Regel-/Auswerteeinheit den kritischen Wert so vor, daß sich selbst im Falle des geringst möglichen Temperaturwertes im Arbeitsbereich kein Kondensat in dem Gehäuse bildet.

Gemäß einer besonders günstigen Ausführungsform der erfindungsgemäßen Vorrichtung ist vorgesehen, daß die Regel-/Auswerteeinheit anhand von Historiendaten eine Information ausgibt, zu welchem Zeitpunkt voraussichtlich der kritische Wert für den Taupunkt und/oder die absolute Luftfeuchte in dem Innenraum des Gehäuses erreicht wird. Erkennt die Regel-/Auswerteeinheit, daß sich die absolute Luftfeuchte bzw. der Taupunkt in dem Gehäuse des Meßumformers stetig erhöht, so wird dies als Pumpeffekt interpretiert. Eine entsprechende Meldung weist das Bedienpersonal daraufhin, daß das Gehäuse eine undichte Stelle hat, über die mit Feuchtigkeit angereicherte Luft in das Gehäuse eindringt. Anhand der Historien-Information erhält das Bedienpersonal einen konkreten Hinweis auf den Zeitpunkt, wann mit einem Ausfall des Meßumformers aufgrund von Kondensatbildung im Gehäuse zu rechnen ist. Entsprechende Gegenmaßnahmen, z.B. der Austausch des Meßumformers, können rechtzeitig veranlaßt werden, ohne daß es zu einem Ausfall des Meßgeräts kommt.

Die Erfindung wird anhand der nachfolgenden Zeichnungen näher erläutert. Es zeigt:
- Fig. 1:: eine Seitenansicht eines Coriolis-Durchflußmeßgerät; und
- Fig. 2:: eine schematische Darstellung einer Regel-/Auswerteeinheit mit integriertem Sensor zur Bestimmung der Temperatur und der relativen Luftfeuchte.

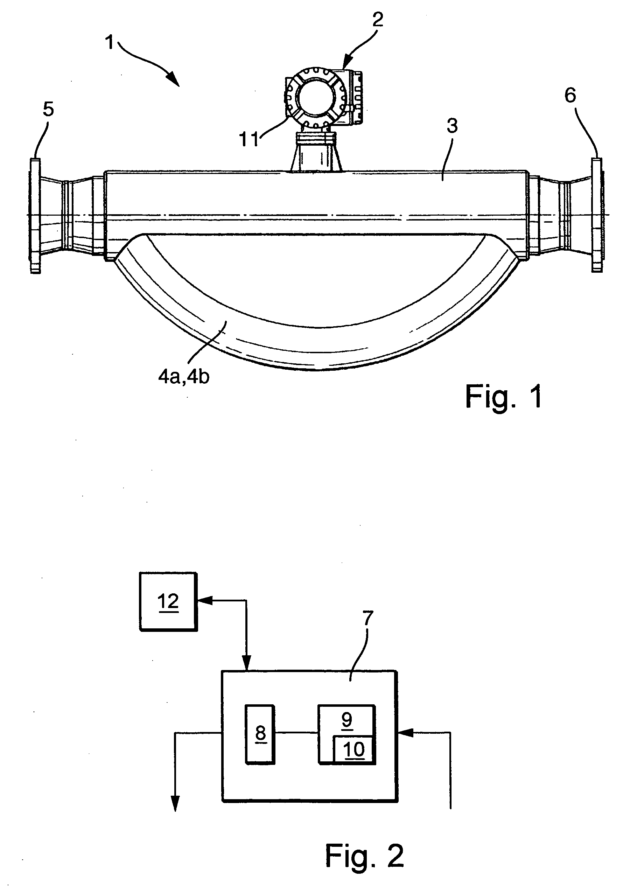

Fig. 1 zeigt eine Seitenansicht eines Coriolis-Meßgeräts 1 bzw. eines Meßgeräts vom Vibrationstyp, das für die Messung des Durchflusses, der Dichte und/oder der Viskosität geeignet ist. Der Meßaufnehmer 3 ist im Betrieb in eine in der Fig. 1 nicht gesondert dargestellte Rohrleitung eingesetzt, die vom Meßmedium durchströmt wird. Bei dem Meßmedium kann es sich um Dampf, ein Gas oder um eine Flüssigkeit handeln. Das Meßgerät 1 wird im dargestellten Fall über Flansche 5, 6 in die Rohrleitung eingesetzt. Selbstverständlich kann der Anschluß an die Rohrleitung auch über anderweitige Befestigungen, z.B. über Triclamp-Anschlüsse oder über Schraubverbindungen erfolgen.

Im dargestellten Fall hat der Meßaufnehmer 3 zwei parallele gebogene Meßrohre 4a, 4b, durch die das Meßmedium geleitet wird. Die Meßrohre können jedoch auch gerade sein. Ebenso ist es möglich, Coriolis-Meßgeräte 1 mit nur einem Meßrohr 4 auszustatten.
Im Betrieb werden die Meßrohre 4a, 4b von einer meist am Scheitel der Meßrohre 4a, 4b fixierten Erregeranordnung zu stimmgabelartigen Vibrationen, bevorzugt zu Resonanz-Vibrationen angeregt. Sensoranordnungen, die die Vibrationen aufnehmen, sind üblicherweise am einlaß- und am auslaßseitigen Ende der Meßrohre 4a, 4b angeordnet. Erregeranordnung und Sensoranordnungen sind in der Fig. 1 nicht gesondert dargestellt. Coriolis-Meßgeräte werden übrigens von der Anmelderin in unterschiedlichsten Ausführungen unter der Bezeichnung PROMASS angeboten und vertrieben.

Der Meßumformer 2 ist im gezeigten Fall direkt an dem Meßaufnehmer 3 befestigt und bildet mit ihm zusammen ein Kompaktgerät. Der Meßumformer 2 besteht aus einem gekapselten, gasdicht verschlossenen Gehäuse 11, in dem zumindest die elektrischen und/oder elektronischen Komponenten der Regel-/Auswerteeinheit 7 angeordnet sind. Wesentliche Komponenten der Regel-/Auswerteeinheit 7 sind - wie in Fig. 2 schematisch dargestellt - ein Mikroprozessor 9 und eine Speichereinheit 10. In der Speichereinheit 10 sind gemäß einer bevorzugten Ausgestaltung der erfindungsgemäßen Vorrichtung Tabellen oder Funktionen bzw. gefittete Funktionen abgespeichert, aus denen bei Kenntnis der aktuellen Temperatur- und relativen Luftfeuchtewerte im Gehäuse 11 sowie bei Kenntnis des Innenvolumens des Gehäuses 11 die absolute Luftfeuchte und/oder Taupunkt bestimmbar sind/ist.

Die Messung der aktuellen Temperatur und der relativen Luftfeuchte in dem Gehäuse 11 erfolgt mittels des Sensors 8. Bei dem Sensor 8 handelt es sich bevorzugt um einen hochintegrierten SMD-Halbleitersensor, der sich dadurch auszeichnet, daß er relativ kostengünstig ist und aufgrund seiner kompakten Bauweise wenig Platz beansprucht; darüber hinaus liefert er die Meßwerte bereits in digitaler Form. Somit erübrigt sich eine A/D-Wandlung, und die Meßwerte können unmittelbar von dem Mikroprozessor 9 ausgewertet werden. Es versteht sich von selbst, daß auch jede andere Ausgestaltung des Temperatursensors und/oder des Feuchtesensors in Verbindung mit der erfindungsgemäßen Vorrichtung zum Einsatz kommen kann. So ist es selbstverständlich auch möglich, einen Temperatursensor und einen separaten Feuchtesensor in dem Gehäuse 11 anzuordnen.

Sobald sich anhand der Meßwerte des Temperatur-/Luftfeuchtesensor 8 zeigt, daß sich die Temperatur in dem Gehäuse 11 dem errechneten kritischen Taupunkt bzw. der errechneten kritischen absoluten Luftfeuchte nähert und/oder daß der entsprechende kritische Wert erreicht ist, so gibt die Regel-/Auswerteeinheit 7 eine entsprechende Warnmeldung aus. Anhand von aufgezeichneten Historiendaten läßt sich darüber hinaus auch vorhersagen, zu welchem Zeitpunkt voraussichtlich ein kritischer Wert für den Taupunkt und/oder die absolute Luftfeuchte in dem Gehäuse 11 erreicht wird. Somit kann dem Bedienpersonal bereits frühzeitig - wenn das Meßgerät 1 also noch korrekt arbeitet - mitgeteilt werden, wann mit einem Versagen des Meßgeräts 1 zu rechnen ist. Darüber hinaus ist es möglich, das Bedienpersonal frühzeitig auf undichte Stellen am Meßumformer 2 hinzuweisen.

Wie bereits an vorhergehender Stelle erwähnt, ist die erfindungsgemäße Vorrichtung in Verbindung mit jedem beliebigen, in der Prozeßmeßtechnik eingesetzten Meßgerät 1 verwendbar. Meßgeräte 1 für die unterschiedlichsten Aufgabenstellungen werden von der Endress+Hauser Gruppe angeboten und vertrieben.

### Bezugszeichenliste

- 1: Coriolis-Durchflußmeßgerät
- 2: Meßumformer
- 3: Meßaufnehmer
- 4: Gebogenes Meßrohr
- 5: Flansch
- 6: Flansch
- 7: Regel-/Auswerteeinheit
- 8: Temperatur-/Feuchtesensor
- 9: Mikroprozessor
- 10: Speichereinheit
- 11: Gehäuse
- 12: Eingabeeinheit

## Patentansprüche

1. Vorrichtung zur Überwachung eines Meßumformers (2) eines Feldgeräts (1) zur Bestimmung und/oder Überwachung einer physikalischen und/oder chemischen Prozeßgröße,
wobei in dem Gehäuse (11) des Meßumformers zumindest ein Sensor (8) vorgesehen ist, der über eine Zeitspanne in vorgegebenen Abständen die Temperatur und die relative Luftfeuchte in dem Gehäuse (11) ermittelt,
wobei eine Regel-/Auswerteeinheit (7) vorgesehen ist, die anhand der gemessenen Temperatur- und relativen Luftfeuchtewerte die absolute Luftfeuchte und/oder den Taupunkt in dem Gehäuse (11) des Meßumformers (2) bestimmt und einen Alarm ausgibt, wenn die absolute Luftfeuchte und/oder der Taupunkt in dem Gehäuse (11) des Meßumformers (2) einen kritischen Wert erreicht.

2. Vorrichtung nach Anspruch 1,
wobei es sich bei dem Sensor (8) zum Messen der Temperatur und der relativen Luftfeuchte um einen SMD-Halbleitersensor handelt.

3. Vorrichtung nach Anspruch 1 oder 2,
wobei eine Speichereinheit (10) vorgesehen ist, in der ein Arbeitspunkt bzw. ein Arbeitsbereich für die Temperatur vorgegeben ist.

4. Vorrichtung nach Anspruch 1, 2 oder 3,
wobei eine Eingabeeinheit (12) vorgesehen ist, über die der Arbeitspunkt bzw. der Arbeitsbereich für die Temperatur eingebbar ist.

5. Vorrichtung nach Anspruch 1,
daß die Regel-/Auswerteeinheit (7) den kritischen Wert so legt, daß sich im Falle der geringst möglichen Arbeits-Temperatur kein Kondensat in dem Gehäuse (11) bildet.

6. Vorrichtung nach Anspruch 1 oder 5,
wobei die Regel-/Auswerteeinheit (7) einen Alarm setzt, wenn ein vorgegebener Toleranzwert um den kritischen Wert erreicht bzw. unterschritten wird.

7. Vorrichtung nach Anspruch 6,
wobei die Regel-/Auswerteeinheit (7) anhand von Historiendaten eine Information ausgibt, zu welchem Zeitpunkt voraussichtlich der kritische Wert erreicht wird.
